(19) Europäisches Patentamt
European Patent Office
Office européen des brevets

(11) Numéro de publication : 0 284 478 B1

(12) **FASCICULE DE BREVET EUROPEEN**

(45) Date de publication du fascicule du brevet : **30.10.91 Bulletin 91/44**

(51) Int. Cl.$^5$ : **C01B 21/097**

(21) Numéro de dépôt : **88400526.5**

(22) Date de dépôt : **04.03.88**

# (54) Procédé de préparation de N(dichlorophosphoryl) trichlorophosphazène.

Le dossier contient des informations techniques présentées postérieurement au dépôt de la demande et ne figurant pas dans le présent fascicule.

(30) Priorité : **10.03.87 FR 8703249**

(43) Date de publication de la demande : **28.09.88 Bulletin 88/39**

(45) Mention de la délivrance du brevet : **30.10.91 Bulletin 91/44**

(84) Etats contractants désignés : **AT BE CH DE ES FR GB GR IT LI LU NL SE**

(56) Documents cités :
**US-A- 3 231 327**
**CHEMISCHE BERICHTE, Vol. 94, 1961, pages 1591-1594, Weinheim, DE; M. BECKE-GOEHRING et al.: "Ein neues Phosphornitrid-chlorid, P3NC112"**

(56) Documents cités :
**CHEMICAL ABSTRACTS, vol. 92, no. 8, 25 février 1980, page 694, résumé no. 68851h, Columbus, Ohio, US; V.A. GILYAROV et al.: "Preparation of (dichlorophosphinyl)phosphorimidic trichloride", & IZV AKAD. NAUK SSSR, SER. KHI M. 1979, (11), 2625-6**
**JOURNAL OF THE CHEMICAL SOCIETY (A), 1970, pages 3025-3029, Letchworth, GB; J. EMSLEY et al.: "Elucidation of the reaction of phosphorus pentachloride and ammonium chloride by phosphorus-31 nuclear magnetic resonance spectroscopy"**

(73) Titulaire : **ATOCHEM**
**4 & 8, Cours Michelet La Défense 10**
**F-92800 Puteaux (FR)**

(72) Inventeur : **Passimourt, Nadine**
**5 Rue des Alliés**
**F-64000 Pau (FR)**
Inventeur : **Potin, Philippe**
**9 Rue des Pâquerettes**
**F-64140 Billère (FR)**

(74) Mandataire : **Rochet, Michel et al**
**ATOCHEM Département Propriété Industrielle**
**4, Cours Michelet La Défense 10 Cedex 42**
**F-92091 Paris-La-Défense (FR)**

EP 0 284 478 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé de préparation de N(dichlorophosphoryl)trichlorophosphazène à partir de pentachlorure de phosphore et de chlorure d'ammonium.

Le brevet américain 3231327 décrit la préparation de N(dichlorophosphoryl)trichlorophosphazène de formule (I)

$$Cl_2 - \overset{\overset{\displaystyle O}{\|}}{P} - N = PCl_3 \text{ (formule abrégée } P_2NOCl_5\text{)}$$

à partir de pentachlorure de phosphore et de chlorure d'ammonium, selon le schéma réactionnel :

1. $9PCl_5 + 3NH_4Cl \rightarrow 3P_3NCl_{12} + 12HCl$
2. $3P_3NCl_{12} + 2P_2O_5 \rightarrow 3P_2NOCl_5 + 7POCl_3$

A la lecture de ce brevet il n'apparaît pas que la granulométrie de $NH_4Cl$ ait une influence sur la conduite de la réaction et la nature des produits en résultant. De surcroît, ce même document recommande l'emploi de $NH_4Cl$ en excès d'environ 10% par rapport à la stoechiométrie de la réaction avec $PCl_5$. Or il apparaît que la préparation de $P_2NOCl_5$ effectuée sans s'inquièter des paramètres précités, à savoir la granulométrie de $NH_4Cl$ en premier lieu et, à titre complémentaire, le rapport molaire des réactifs, conduit à des résultats très aléatoires, notamment en ce qui concerne le taux de conversion des réactifs et, secondairement, l'absence de formation d'oligomères linéaires de formule du type :

$$[Cl_3P-(N = 3Cl_2-)_nPCl_3]^+Cl^-$$

L'un des objets de la présente invention est donc de proposer une technique permettant de préparer d'une manière tout à fait reproductible une même qualité de N(dichlorophosphoryl)tirchlorophosphazène.

Un autre objet de l'invention est de fournir un procédé permettant d'obtenir le N(dichlorophosphoryl)trichlorophosphazène avec un taux de conversion des réactifs très élevé c'est-à-dire au moins égal à 85% et de préférence supérieur à 95%.

L'invention propose encore à titre de variante préférentielle une technique permettant d'associer au taux de conversion élevé mentionné ci-avant l'obtention d'un produit ne renfermant qu'un très faible pourcentage d'oligomères linéaires, ledit pourcentage pouvant être réduit à moins de 0,5%.

D'autres avantages du procédé conforme à l'invention apparaîtront à la lecture de ce qui suit.

L'invention concerne donc un procédé de préparation de N(dichlorophosphoryl) trichlorophosphazène ($P_2NOCl_5$) à partir de pentachlorure de phosphore et de chlorure d'ammonium, ce procédé étant caractérisé en ce que plus de 50% en poids de particules de chlorure d'ammonium ont une granulométrie inférieure à 0,16 mm.

A titre préférentiel, plus de 75% en poids des particules de $NH_4Cl$ présentent une granulométrie inférieure à 0,16 mm.

Selon une modalité préférentielle du procédé conforme à l'invention, le chlorure d'ammonium, présentant la granulométrie définie précédemment est mis en oeuvre en quantité telle que le rapport molaire $\frac{PCl_5}{NH_4Cl}$ soit sensiblement égal à 3.

L'expression "sensiblement égal à 3" signifie que les réactifs sont préférentiellement mis en oeuvre en quantités stoechiométriques (rapport de 3 qui permet d'obtenir à la fois un rendement brut proche de 100% et un taux d'oligomères linéaires inférieur à 1% du poids de $P_2NOCl_5$ brut), mais qu'un excès de $NH_4Cl$ ne dépassant pas 8% par rapport à cette stoechiométrie peut être utilisé si on tolère la présence d'un taux d'oligomères pouvant atteindre au maximum 10%.

Les conditions générales de mise en contact de $PCl_5$ et de $NH_4Cl$ et traitement subséquent conduisant à $P_2NOCl_5$ sont décrits dans la littérature. Un mode opératoire particulièrement avantageux et constituant une modalité préférentielle de mise en oeuvre du procédé conforme à l'invention consiste à mettre en contact le pentachlorure de phosphore et le chlorure d'ammonium, à traiter au moyen de $SO_2$ le milieu réactionnel contenant $P_3NCl_{12}$ et à séparer le phosphazène de formule I.

Selon une variante de ce procédé, on peut former in situ le pentachlorure de phosphore à partir de $PCl_3$ et $Cl_2$.

L'oxychlorure de phosphore ($POCl_3$) est utilisé avantageusement comme solvant d'une partie au moins

des réactifs. D'une manière générale, la quantité pondérale de $POCl_3$ mise en oeuvre est comprise entre 0,5 et 5 fois la quantité pondérale de $PCl_5$ + $NH_4Cl$, et plus avantageusement entre 0,8 et 2 fois.

Il faut considérer que $POCl_3$ est tout particulièrement recommandé pour l'obtention d'un phosphazène de formule I, quasiment exempt d'homologues supérieurs ou d'oligomères cycliques. Il va sans dire qu'on ne sortirait pas du cadre de l'invention en associant à $POCl_3$ d'autres solvants connus pour ce type de réaction tels que le tétrachloroéthane symétrique ou le chlorobenzène.

Le dioxyde de soufre est utilisé pour la décomposition de $P_3NCl_{12}$ en $P_2NOCl_5$. De ce fait, la quantité de $SO_2$ mise en oeuvre doit être telle que le rapport molaire $\frac{SO_2}{PCl_5\ \text{engagé}}$ soit d'au moins 2/3. On peut utiliser un rapport supérieur mais il n'apparaît pas avantageux de dépasser un rapport molaire de 1,5/l.

La réaction de $PCl_5$ et $NH_4Cl$ s'effectue généralement en atmosphère inerte et à une température supérieure à 70°C. On opère avantageusement sous pression atmosphérique et à température de reflux de $POCl_3$, le milieu réactionnel étant fortement agité. La durée de la réaction est de l'ordre de quelques heures, par exemple de 1 à 8 heures. A la fin de la réaction (marquée notamment par la cessation de l'émission d'HCl), il est avantageux d'abaisser la température du milieu réactionnel, par exemple jusqu'à une température au plus égale à environ 30°C.

Il convient de considérer la valeur 30°C comme une valeur maximale recommandée pour obtenir des produits incolores mais compte tenu des modalités pratique d'appréciation de la coloration (examen optique), cette valeur peut être légèrement dépassée sans sortir du cadre de l'invention.

Dans le milieu réactionnel ainsi maintenu à basse température et notamment à environ 30°C ou à une température inférieure, on introduit le $SO_2$. Cette introduction s'effectue à une vitesse telle que la température du milieu ne s'élève pas au-dessus de 30°C. D'une manière plus générale, le traitement au moyen de $SO_2$ peut s'effectuer à toute température comprise entre la température de fusion du milieu réactionnel et au plus 30°C.

Le $SO_2$ est avantageusement introduit progressivement, pendant une durée pouvant aller de 0,5 à 10 heures, et de préférence de 1 à 6 heures, ces valeurs ne pouvant être considérées que comme des ordres de grandeur.

Les réactions de formation et de décomposition de $P_3NCl_{12}$ et les excès éventuels de réactifs mis en oeuvre entraînent la présence de HCl et de $SO_2$, qui peuvent être éliminés par simple barbotage d'azote, ou sous pression réduite ainsi que de $POCl_3$ et $SOCl_2$ qui sont éliminés par évaporation sous pression réduite.

Bien que le procédé décrit ci-avant constitue une variante particulièrement avantageuse, l'invention, telle que définie par ses caractéristiques de granulométrie du chlorure d'ammonium et à titre complémentaire, de rapport molaire des réactifs peut être mise en oeuvre dans tout procédé comportant la réaction $PCl_5/NH_4Cl$, même si la décomposition de $P_3NCl_{12}$ s'effectue sous l'action d'autres produits que $SO_2$, comme par exemple $P_2O_5$ ou de $SO_2$ mis en oeuvre dans des conditions différentes de celles décrites ci-avant.

Le procédé conforme à l'invention permet d'obtenir du N(dichlorophosphoryl)trichlorophosphazène d'une manière parfaitement reproductible. La mise en oeuvre de ce procédé permet d'atteindre un rendement voisin de 100% et ceci avec un taux d'oligomères pouvant être inférieur à 0,5%.

Les exemples suivant illustrent l'invention :

EXEMPLE 1 :

a) Mode opératoire :

On introduit successivement dans un réacteur $NH_4Cl$, $PCl_5$ et $POCl_3$. L'ensemble est porté à la température de reflux du solvant et maintenu sous agitation à cette température pendant 2 heures. Le mélange réactionnel se présente sous forme d'une suspension de $P_3NCl_{12}$.

On refroidit le mélange réactionnel à 20°C et injecte dans le milieu du $SO_2$ en maintenant la température au-dessous de 20°C.

Après réaction, les gaz résiduels (HCl et $SO_2$) sont éliminés sous courant d'azote, $POCl_3$ et $SOCl_2$ étant éliminés sous pression absolue réduite à 133,32 Pa (1 torr) (température 60°C — durée 1 heure).

Le reliquat ($P_2NOCl_5$ brut) est distillé dans une colonne de Vigreux à 90°C sous 66,66 Pa (0,5 torr) (pression absolue)

b) Quantités mises en jeu :

| | $R_1$ | $R_2$ | $R_3$ |
|---|---|---|---|
| Capacité du réacteur (l) | 0,5 | 2 | 6 |
| $PCl_5$ (g) | 313 | 1250 | 2400 |
| $POCl_3$ (ml) | 250 | 1000 | 1500 |
| $SO_2$ (g) | 100 | 300 | 600 |

c) granulométrie de $NH_4Cl$ (mm) :

| | | |
|---|---|---|
| $G_1$ | 32,90 % | 0,8 à 1 mm |
| | 44,82 % | 0,63 à 0,8 mm |
| | 10,60 % | 0,5 à 0,63 mm |
| | 5,45 % | 0,4 à 0,5 mm |
| | 2,11 % | < 0,4 mm |
| $G_2$ | 17,73 % | > 0,25 mm |
| | 57,94 % | 0,16 à 0,25 mm |
| | 24,13 % | < 0,16 mm |
| $G_3$ | 0,09 % | > 0,16 mm |
| | 3,89 % | 0,125 à 0,16 mm |
| | 15,07 % | 0,1 à 0,125 mm |
| | 60,32 % | 0,08 à 0,1 mm |
| | 18,65 % | 0,04 à 0,08 mm |
| | 1,97 % | < 0,04 mm |

d) Analyses :

Le rendement brut est donné par la pesée du reliquat brut mentionné plus haut.

Le taux d'oligomères est mesuré par résonnance magnétique nucléaire $^{31}P$ à 250 mégacycles sur le reliquat brut : il est exprimé en pourcentage de phosphore contenu dans les différentes espèces chimiques.

Le rendement après distillation correspond à la somme de la masse de tête (têtes analytiquement pures par RMN $^{31}P$) et de coeur, divisée par la masse théorique à obtenir.

e) Résultats :

| EXEMPLES | QUANTITES MISES EN JEU | GRANULOMETRIE $NH_4Cl$ | EXCES % $NH_4Cl$ | TAUX DE CONVERSION % | OLIGOMERES % | RENDEMENT % DISTILLE |
|---|---|---|---|---|---|---|
| INVENTION | | | | | | |
| 1 | $R_2$ | $G_3$ | 7,5 | 97,5 | 5,9 | 85 |
| 2 | $R_2$ | $G_3$ | 0 | 95,9 | 0,67 | 94,5 |
| 3 | $R_3$ | $G_3$ | 0 | 95,6 | 0,40 | 93,86 |
| 4 | $R_1$ | $G_3$ | 10,2 | 99,2 | 18,2 | 62,4 |
| EXEMPLES COMPARATIFS | | | | | | |
| a | $R_3$ | $G_1$ | 9,54 | 37,85 | | |
| b | $R_2$ | $G_2$ | 0 | 52,81 | | |

Il ressort clairement de ce tableau que l'emploi d'une granulométrie majoritairement inférieure à 0,16 mm conduit à un taux de conversion supérieur à 95%.

Il apparaît en outre que lorsqu'une telle granulométrie est associée à un faible excès de $NH_4Cl$ ou mieux encore à un rapport molaire $\frac{PCl_5}{NH_4Cl}$ sensiblement stoechiométrique, le taux d'oligomères peut descendre jusqu'à des valeurs excessivement faibles.

## Revendications

1. Procédé de préparation du N(dichlorophosphoryl)trichlorophosphazène ($P_2NOCl_5$) par réaction de pentachlorure de phosphore et de chlorure d'ammonium dans un milieu solvant constitué en tout ou partie par de l'oxychlorure de phosphore ($POCl_3$), et décomposition de $P_3NCl_{12}$ formés par cette réaction en $P_2NOCl_5$ notamment par addition de $SO_2$, caractérise en ce que plus de 50% en poids des particules de chlorure d'ammonium ont une granulométrie inférieure à 0,16 mm.

2. Procédé selon la revendication 1, caractérisé en ce que plus de 75% en poids des particules de chlorure d'ammonium ont une granulométrie inférieure à 0,16 mm.

3. Procédé selon l'une quelconque des revendications 1 ou 2, caractérisé en ce que les réactifs sont mis en oeuvre en quantités telles que le rapport molaire $\frac{PCl_5}{NH_4Cl}$ soit sensiblement égal à 3.

4. Procédé selon la revendication 3, caractérisé en ce que les réactifs sont mis en oeuvre en quantités comprises entre la quantité stoechiométrique et un excès de $NH_4Cl$ de dépassant pas 8% par rapport à ladite quantité stoechiométrique.

## Patentansprüche

1. Verfahren zur Herstellung von N(Dichlorphosphoryl)-trichlorphosphazen ($P_2 NOCl_5$) durch Umsetzung von Phosphorpentachlorid und Ammoniumchlorid in einem Lösungsmittel, das ganz oder teilweise aus Phosphorylchlorid ($POCl_3$) besteht, und anschließender Zersetzung, insbesondere durch $SO_2$-Zugabe, des durch diese Reaktion gebildeten $P_3NCl_{12}$ zu $P_2NOCl_5$, dadurch gekennzeichnet, daß mehr als 50 Gew.% der Ammoniumchloridpartikeln eine Korngröße von unter 0,16 mm aufweisen.

2. Verfahren nach Anspruch 1, dadurch gekennzeichnet, daß mehr als 75 Gew.% der Ammoniumchloridpartikeln eine Korngröße von unter 0,16 mm aufweisen.

3. Verfahren nach Anspruch 1 oder 2, dadurch gekennzeichnet, daß die Reaktanten in solchen Mengen eingesetzt werden, daß das Molverhältnis von $\frac{PCl_5}{NH_4Cl}$ etwa 3 beträgt.

4. Verfahren nach Anspruch 3, dadurch gekennzeichnet, daß die Reaktanten in Mengen eingesetzt werden, die zwischen der stöchiometrischen Menge und einem $NH_4Cl$-Überschuß liegen, der 8%, bezogen auf diese stöchiometrische Menge, nicht übersteigt.

## Claims

1. Process for the preparation of N-(dichlorophosphoryl)trichlorophosphazene ($P_2NOCl_5$) by reaction of phosphorus pentachloride and ammonium chloride in a solvent medium consisting wholly or partially of phosphorus oxychloride ($POCl_3$) and decomposition of $P_3NCl_{12}$ formed by this reaction to $P_2NOCl_5$ especially by addition of $SO_2$, characterised in that more than 50% by weight of the ammonium chloride particles have a particle size smaller than 0.16 mm.

2. Process according to Claim 1, characterised in that more than 75% by weight of the ammonium chloride particles have a particle size smaller than 0.16 mm.

3. Process according to either of Claims 1 and 2, characterised in that the reactants are used in quantities such that the molar ratio $PCl_5/NH_4Cl$ is substantially equal to 3.

4. Process according to Claim 3, characterised in that the reactants are used in quantities of between the stoichiometric quantity and an excess of $NH_4Cl$ not exceeding 8% relative to the said stoichiometric quantity.